# EUROPEAN PATENT SPECIFICATION

(11) **EP 2 513 364 B1**
(45) Date of publication and mention of the grant of the patent: **11.05.2016**
(21) Application number: 09799732.4
(22) Date of filing: 17.12.2009
(51) Int. Cl.: D04C 5/06, B21F 27/06

(54) **PLASTIC OPEN MESH NET MANUFACTURING DEVICE AND MACHINE**
VORRICHTUNG UND MASCHINE ZUR HERSTELLUNG EINES OFFENEN PLASTIKMASCHENNETZES
DISPOSITIF ET APPAREIL POUR LA PRODUCTION D'UN FILET OUVERT À MAILLES EN PLASTIQUE

(43) Date of publication of application: 24.10.2012
(73) Proprietor: Officine Maccaferri S.p.A., 40069 Zola Predosa (BO) (IT)
(72) Inventor: FERRAIOLO, Francesco, I-40050 Ca' de' Fabbri (Bologna) (IT)
(74) Representative: Provvisionato, Paolo
(86) International application number: PCT/IB2009/055818
(87) International publication number: WO 2011/073730

(56) References cited:
- WO-A1-2004/003302
- JP-A- 57 028 645
- JP-A- 57 056 556

## Description

### Technical Field

This invention relates to the field of devices and machines for manufacturing open mesh nets.

Within the context of the present description, the term "honeycomb net" is also used to designate an open mesh net, where several wires are connected by twisting adjacent wires to each other so as to form a net whose openings resemble the cells of a honeycomb. However, the present invention is not limited to hexagonal cells or double-twisted nets.

The invention has been developed with particular regard to a device which can twist plastic wires and manufacture open mesh or honeycomb nets.

In the simple structure of present invention, each plastic wire is heated evenly just before twisting. This invention also simplifies and facilitates the threading operation of plastic wires and furthermore, in the area of honeycomb net manufacturing, this device helps to maintain an even honeycomb shape.

### Background Art

Honeycomb nets woven using twisted metal wires or twisted synthetic resin wires are known.

A honeycomb net is structured with twisted wires which are adjacent and twisted to each other. The strength and durability are extremely excellent and thus this net can be used for fencing, propping cultivation, withholding fallen rock, etc. Twisted and woven synthetic resin honeycomb nets do not rust and corrode in comparison to metal wire honeycomb nets, and therefore they have better durability.

Regarding the strength and regularity of net mesh, an excellent one was developed as shown in patent document JP 57-56556, which relates to a honeycomb net body manufacturing method.

JP 57-56556 shows how to pre-heat wrought, non solid wire to prescribed temperature, then twist it under tension condition. After being formed, the net body is heated up permanently in the required shape then rapidly cooled down to preserve the shape.

Prior patent documents JP 57-28645, JP 54-96183, JP 54-46970 also define the background art for the present invention.

The prior art has various disadvantages, which are discussed below.

It is not simple to pre-heat evenly a plastic wire (corresponding to the wire of the prior art patents) before twisting it, especially by means of a heater or through a heated air zone. It often happens that a partially uneven pre-heating occurs, so that it is then difficult to twist and weave the wire into a open mesh or honeycomb net where uniform shape and strength are desired.

Also when it comes to the threading operation, each plastic wire has to be threaded or inserted into a thread-hole provided in a semi-cut gear of a rear net twist auxiliary mechanism whose movement is coordinated with a similar and corresponding front net twist mechanism. Each plastic wire then has to be threaded or inserted into a respective thread-hole of a semi-cut gear of the front net twist mechanism. This operation is rather critical, because if a wire is mistakenly threaded into the wrong thread-hole, for example of another front net twist mechanism, all the threads would shift and the whole threading operation would have to be done again.

This threading operation from the rear net twist auxiliary mechanism to the front net twist mechanism of the known machines and devices has always proved troublesome and involves a lot of work and time.

Furthermore, after two plastic wires are twisted in a machine of the known art, the same two plastic wires are opened, that is, separated, towards opposite sides to form the shape of the honeycomb, that is, one of the openings of the open mesh. However, in doing so the twisted portion of the net is strongly pulled towards opposite directions, so that it can deform to the point that the honeycomb shape cannot be properly obtained or maintained. It is therefore difficult to twist the wires and weave a honeycomb net which has even and uniform shape and strength.

### Brief Description of the Invention

It is an object of the present invention to solve the problems indicated above. Another object of the invention is to provide a device to be used in a machine to manufacture a strong, even and durable plastic open mesh or honeycomb net, at a reduced cost, with high production rate, and with little or no maintenance.

In order to reach the above objects, the invention relates to a plastic open mesh or honeycomb net manufacturing device wherein two corresponding thread-holes provided in a front net twist mechanisms and a rear net twist auxiliary mechanism, respectively, are connected through a heat-conductive thread guide.

In a preferred but non limiting example, the heat-conductive thread guide is in the form of a heat-conductive thread pipe or tube.

By means of this arrangement, each plastic wire before twisting is threaded through this heated heat-conductive thread guide or, preferably, pipe, so that the plastic wire is pre-heated evenly with this simple structure to prevent partial pre-heating unevenness. The guide, especially in its preferred form of a tube or pipe, simplifies and facilitates the threading operation of the plastic wire from the rear net twist auxiliary mechanism to the front net twist mechanism.

According to another aspect of the present invention, each twist point just after being delivered from the net twist mechanism can be maintained in its net width interval and in even and uniform honeycomb shape, so that the woven honeycomb net has even strength.

A machine which produces a plastic net according to the invention provides a net twist mechanism with several pairs of semi-cut gears arranged in the direction of the resulting net width. These semi-cut gears have thread-holes for plastic wire and are coupled in pairs, so that they can be rotated together to twist a couple of wires threaded through their respective thread-holes. After a few rotations of the pairs of semi-cut gears, which rotations lead to corresponding twists of the several pairs of plastic wires distributed along the width of the resulting net, each pair of semi-cut gears is separated and one or both of the respective semi-cut gear is laterally shifted until it coincides with another adjacent semi-cut gear, to form another pair of semi-cut gears which is then rotated to form the subsequent twisted portion of the net in a honeycomb fashion. The semi-cut gears then go back to the original position to form by rotation and twisting of wires another twisted portion of the net.

At the back of this net twist mechanism, it is provided a net twist auxiliary mechanism which has respective twisting semi-cut gears which correspond with, one to one, each semi-cut gear of the net twist mechanism. Each semi-cut gear of the net twist auxiliary mechanism has a respective thread-hole for plastic wire and synchronizes in rotation and separation/shifting in the direction of net width with a corresponding semi-cut gear of the front net twist mechanism.

A twist back mechanism is provided at the back side of said net twist auxiliary mechanism, and comprises guide gear which synchronizes in rotation with each paired semi-cut gear of net twist mechanism and net twist auxiliary mechanism. Inside this guide gear, a front supply bobbin or reel is mounted which supplies plastic wire to one semi-cut gear, while a back supply bobbin or reel which supplies plastic wire to the other semi-cut gear of a pair is located at the back of the guide gear. The plastic wire coming from the back supply bobbin is hooked at the outer circumferential channel of the guide gear and rotated therewith.

A guide device to change hanging of plastic wire supplied from each rear supply bobbin is installed between front supply bobbin and rear supply bobbin, to corresponding guide gear.

A heating device is located at the region where the heat-conductive thread guide connects thread-holes of corresponding semi-cut gear of said rear net twist auxiliary mechanism and said net twist mechanism. The heating device heats up evenly the plastic wire guided by the heat-conductive thread guide, especially when the latter is in the form of a heat-conductive thread pipe with the plastic wire running inside it.

According to another aspect of the present invention, holding means in the preferred form of holding combs are provided after the net twist mechanism to improve evenness and uniformity of the manufactured plastic honeycomb net. These holding means comprise at least a number of concave portions each located at the spot which corresponds to each twisted portion of the honeycomb net in the direction of net. These holding means are preferably, but not exclusively made of a piece of corrugated plastic injection. The holding means are moved a little bit forward with the same speed as the supply speed of honeycomb net from the net twist mechanism, then go quickly back to the original position to repeat this forward movement.

With a plastic honeycomb net manufacturing machine according to the present invention, the plastic wires pass through respective heat-conductive thread guides, preferably heat-conductive thread pipes, which connect respective thread-holes in semi-cut gears provided in front net twist mechanism and rear net twist auxiliary mechanism. A heating device to heat up evenly the plastic wire through heat-conductive thread guide or preferably pipe renders it possible to prevent uneven twisting due to pre-heating unevenness, so as to weave a plastic honeycomb net which has even shape and strength.

In addition, due to the provision of said heat-conductive thread guide or preferably pipe, the conventional troublesome operation of threading plastic wires into the thread-holes of the front net twist mechanism after they have been threaded into the thread-holes of the rear net auxiliary twist mechanism can be omitted, therefore simplifying and facilitating the plastic wire threading operation so as to drastically shorten the operation time.

The provision of holding means after or downstream of said front net twist mechanism, particularly but not exclusively in the form of a corrugated holding device in which there is respectively at least a concave portion at the spot corresponding with each twisted portion of honeycomb net in net width direction, where these holding means shift or move forward a little bit with the same speed as the supply speed of honeycomb net from net twist mechanism, and then go quickly back to original position and repeat this forward movement, allows to maintain each twisted portion just after supply thereof from net twist mechanism at the right distance or interval in the direction of net width. In this way, even if two wires are opened or moved away to both sides by constant tension, it is possible to prevent a deformation to the twisted portion of the net, even if either the right side or left is strongly pulled, so as to weave an honeycomb net which has even honeycomb shape and prescribed strength.

### Brief description of drawings

Further characteristics and advantages will emerge from the following detailed description of a preferred although non-limiting embodiment of the invention, with reference to the attached drawings, give by way of non-limiting example, wherein:
Fig.1 is a schematic drawing of a plastic honeycomb net manufacturing machine according to the present invention;
Fig.2 is partial perspective view of a rotation of semi-cut gears in net twist mechanism and net twist auxiliary mechanism;
Fig.3 is partial perspective view of a separation/shifting of semi-cut gears of Fig.2;
Fig.4 is partial perspective view of back twist mechanism;
Fig.5 is partial perspective view of the holding means of the invention, in the form of holding device; and
Figs. 6 A-C are partial cross sections which explain the movements explanation of the holding means of Fig.5.

### Detailed description of preferred embodiments

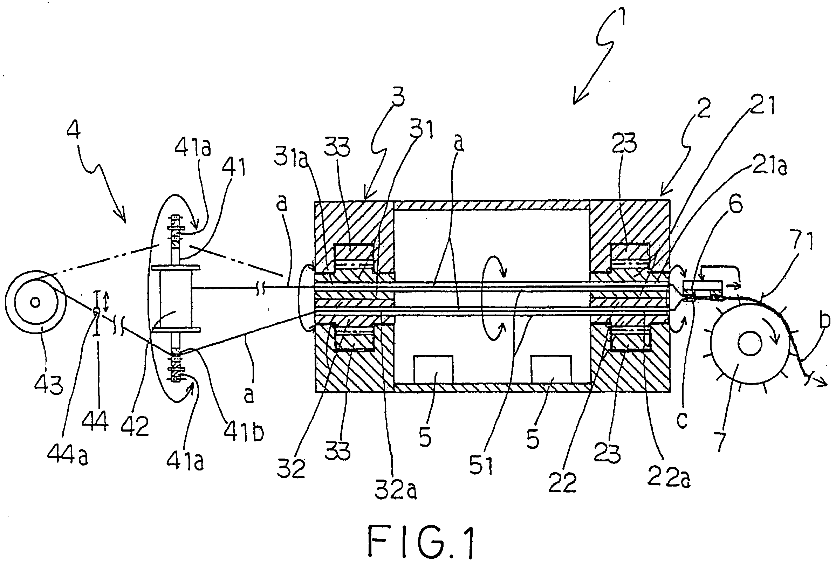

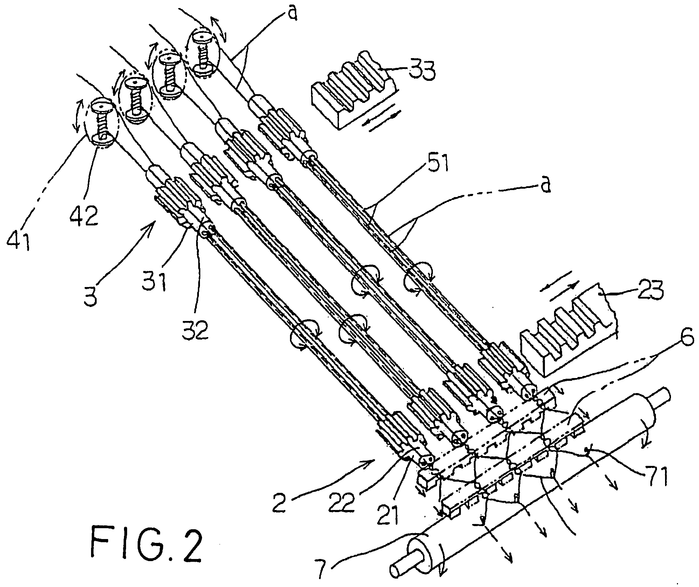

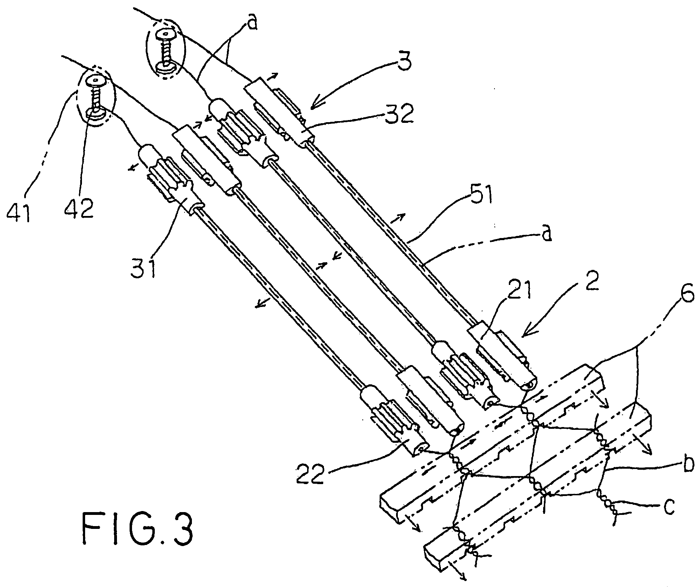

With reference now to figures 1 to 3, a plastic open mesh net manufacturing machine 1 comprises a net twist mechanism 2 to twist plastic wires **a** and weave them so as to form a honeycomb net **b.** A net twist auxiliary mechanism 3 is located behind the net twist mechanism 2. In Fig.1 are also visible a guide gear 41, a front supply bobbin 42 to supply the plastic wire **a,** a rear supply bobbin 43, a twist back mechanism 4 which comprises a guide device 44 installed between front supply bobbin 42 and rear supply bobbin 43. In addition, the machine 1 comprises a heating device 5 to heat up evenly the plastic wire **a** which runs inside a heat-conductive thread pipe 51 installed between the net twist mechanism 2 and net twist auxiliary mechanism 3. A holding means 6, preferably a holding device, is to be installed in front of said net twist mechanism 2 so as to maintain honeycomb net shape.

Net twist mechanism 2 comprises a pair of twisting semi-cut gears 21 and 22 which are repeatedly rotated together and then are separated/shifted in the direction of net width, so as to weave the plastic wires **a** into the plastic wire honeycomb net **b.** The honeycomb net **b** is continuously produced by the net twist mechanism 2. In net twist mechanism 2, racks 23 are disposed (on the top and bottom) and have teeth matching with the semi-cut gears 21 and 22 to rotate them.

The net twist mechanism 2 has thread holes 21a and 22a for the plastic wires **a,** and for example several pairs of semi-cut gears 21 and 22 are installed one beside the other in net width direction. After twisting a few times plastic wires **a** threaded through the thread holes 21a and 22a provided respectively into paired twisting semi-cut gears 21 and 22 which are rotated together, one or both of the semi-cut gears 21 and 22 separate/s and/or shift/s in net width direction until it/they correspond/s, top on bottom, to adjacent and different twisting semi-cut gears 21 and 22. This is followed by the rotation of newly corresponding and paired twisting semi-cut gears 21 and 22, so as to twist a few times two plastic wires **a** threaded through threading holes 21a, 22a of said semi-cut gear 21 and 22. After this operation, the semi-cut gears go back to the original position and repeat the twisting operation with the previously corresponding twisting semi-cut gears 21 and 22 by rotating together and weave the honeycomb net **b.**

The net twist mechanism 2 comprises a structure in which for example several paired top and bottom twisting semi-cut gears 21 and 22 are installed in net width direction. In corresponding top & bottom positions of the paired twisting semi-cut gears 21 and 22, threading holes 21a, 22a are formed, respectively, and plastic wire **a** is threaded into each threading hole 21a, 22a. Paired top & bottom twisting semi-cut gears 21 and 22 are structured so as to rotate a few times and finally reach an analogous top and bottom position illustrated in Fig.1 where the semi-cut gear 21 is again placed above the other, corresponding semi-cut gear 22.

The topmost twisting semi-cut gear 21 and the bottommost twisting semi-cut gear 22 are structured so that one or both separate or shift in net width direction until they correspond top to bottom in an adjacent fashion respectively with other twisting semi-cut gears 21, 22.

At the back of said net twist mechanism 2, that is, upstream in the direction of supply of plastic wire **a,** a net twist auxiliary mechanism 3 is provided which has respective auxiliary twisting semi-cut gears 31, 32, each of which individually correspond to each twisting semi-cut gear 21, 22 of the net twist mechanism 2.

Each auxiliary twisting semi-cut gear 31 and 32 in the net twist auxiliary mechanism 3 has a respective thread hole 31a, 32a for plastic wire **a** to be threaded. Each auxiliary twisting semi-cut gear 31 and 32 in the net twist auxiliary mechanism 3 is synchronized with the rotation and separation/shifting in net width direction and is structured to rotate and separate/shift in net width direction. In net twist auxiliary mechanism 3, racks 33 are allocated on top and bottom to match with teeth of auxiliary twisting semi-cut gears 31, 32.

The net twist auxiliary mechanism 3 is almost similarly structured as the net twist mechanism 2, due to same movement with net twist mechanism 2. This is to prevent each heat-conductive thread pipe 51 from touching and twisting each other due to the movements of rotation and separation/shifting in net width direction of twisting semi-cut gears 21, 22. In fact, if the heat-conductive thread pipes 51 touch or twists with respect to each other, it may the become difficult or problematic to effect the rotation and separation/shifting of twisting semi-cut gears 21, 22 in the net twist mechanism 2. moreover, if a heat-conductivity thread pipe 51 fails or is bent, or if threaded plastic wire **a** is cut or twisted, then it becomes impossible to weave up honeycomb net **b.** Net twist auxiliary mechanism 3 is located at the back of net twist mechanism 2 to prevent this.

Twist back mechanism 4 prevents additional twisting of plastic wire **a** twisted in net twist mechanism 2 by twisting back plastic wire **a** continuously supplied to net twist auxiliary mechanism 3. In fact, an undue additional twisting of plastic wire **a** continuously supplied to net twist auxiliary mechanism 3 and then twisted in net twist mechanism 2, might lead to troubles in forming the honeycomb net **b** smoothly and this might adversely affect its strength.

Moreover, the twist back mechanism 4 can prevent each plastic wire **a** continuously supplied to net twist auxiliary mechanism 3 from intertwining due to movements of rotation and separation/shifting in the direction of net width of each semi-cut gear 31, 32 in net twist auxiliary mechanism 3 so as to smoothly supply plastic wire **a** to net twist auxiliary mechanism 3.

The twist back mechanism 4 comprises the guide gear 41, the front supply bobbin 42 which supplies plastic wire **a,** the rear supply bobbin 43 which supplies another plastic wire **a,** the guide device etc. at the back of said net twist auxiliary mechanism 3. Going backwards, the guide gear 41, the front supply bobbin 42, the guide device 44 and the rear supply bobbin 43 are arranged in this order.

The guide gear 41 rotates to synchronize with the rotation of each paired semi-cut gear 21, 22; 31, 32 in the net twist mechanism 2 and net twist auxiliary mechanism 3. A guide gear which is greater in diameter than the front supply bobbin 42 is located behind said net twist auxiliary mechanism 3. A gearwheel is formed at the outer circumference of guide gear 41, and a rotation gear 41a is provided which is meshing with this gearwheel to rotate the guide gear 41. At the part of guide gear 41 outer circumference, an outer circumferential channel 41b is formed to hook and rotate plastic wire **a** supplied from the rear supply bobbin 43.

The front supply bobbin 42 supplies plastic wire **a** to one of twisting semi-cut gear 21 or 22 in the net twist mechanism 2 through one of auxiliary twisting semi-cut gears 31 or 32 in the corresponding and paired net twist auxiliary mechanism 3. Plastic wire **a** is wound at the front supply bobbin 42. The front supply bobbin 42 is placed inside the circumference of guide gear 41. The front supply bobbin 42 is mounted so that it does not prevent a rotation of rotating guide gear 41.

The rear supply bobbin 43 supplies plastic wire **a** hooked at the outer circumferential channel 41b of the guide gear 41 and rotated to the other semi-cut gear 22 or 21 in the net twist mechanism 2 through the other auxiliary twisting semi-cut gear 32 or 31 in the corresponding and paired net twist auxiliary mechanism 3. Plastic wire **a** is wound at the rear supply bobbin 43 and it is placed at the back of guide gear 41 and the guide device 44.

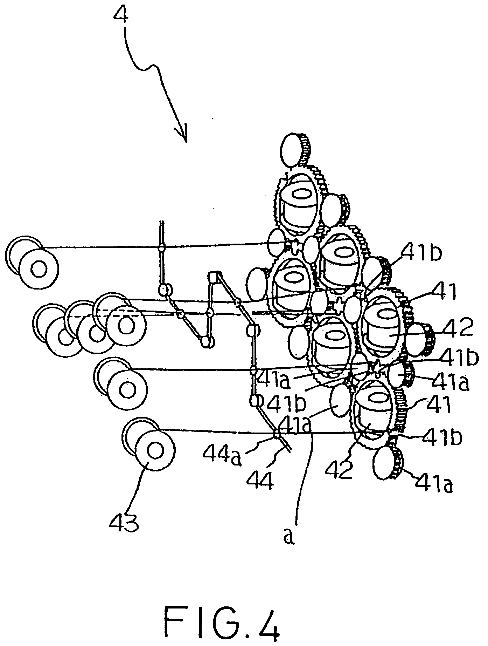

The guide device 44 is located between the front supply bobbin 42 and the rear supply bobbin 43 and a device to change the hanging of plastic wire **a** supplied from each rear supply bobbin 43 to correspond with guide gear 41. In guide device 44 (see Fig.4), block pieces 44a are installed to hook plastic wire **a,** and these block pieces 44a are shifted up and down or right and left, linked with movements of rotation and separation/shifting in net width direction of each semi-cut gear 21, 22 and 31, 32, so as to render it smooth the supply of plastic wire **a** from the rear supply bobbin 43.

Each thread hole in a semi-cut gear 21, 22 of the front net twist mechanism 2 is connected to a respective thread hole in a semi-cut gear 31, 32 in the rear net twist auxiliary mechanism 3 by means of a heat-conductive thread pipe 51 inside which a threaded plastic wire **a** runs. Each heat-conductive thread pipe 51 is respectively moved at the same speed of the semi-cut gears, in parallel relationship.

One end of a heat-conductive thread pipe 51 is connected to the thread hole 21a of twisting semi-cut gear 21 in net twist mechanism 2 and the other end of the heat-conductive thread pipe 51 is connected to the thread hole 31a of auxiliary twisting semi-cut gear 31 in net twist auxiliary mechanism 3 which corresponds to the twisting semi-cut gear 21, synchronized, rotated and separated/shifted in the direction of net width. Similarly, one end of another heat-conductive thread pipe 51 is connected to the thread hole 22a of twisting semi-cut gear 22 in net twist mechanism 2 and the other end of heat-conductive thread pipe 51 is connected to the thread hole 32a of auxiliary twisting semi-cut gear 32 in net twist auxiliary mechanism 3 which corresponds to the twisting semi-cut gear 22, synchronized, rotated, and separated/shifted in the direction of net width.

Each heat-conductive thread pipe 51 is hollow inside, so that one plastic wire **a** is threaded through it. If one plastic wire is threaded from each auxiliary twisting semi-cut gears 31,32 in net twist auxiliary mechanism 3 to correspond width each twisting semi-cut gear 21,22, by utilizing heat-conductive thread pipe 51, threading can be done continually and in its simplest form.

Advantageously, each heat-conductive thread pipe 51 is structured by heating a conductive, for example metal cylindrical pipe. If each heat-conductive thread pipe 51 is heated by the heating device 5, the heat is transferred to all of each heat-conductive thread pipe 51. Each threaded plastic wire **a** is then heated evenly and softened internally as it is being moved towards the front net twist mechanism 2, by the heat-conductive thread pipe 51. Each softened plastic wire **a** is then twisted smoothly and woven into honeycomb net **b** without twist resistance at twisting time.

The heating device 5 is, as mentioned before, the device to heat up evenly plastic wire **a** threaded inside the heat-conductive thread pipe 51. The heating device 5 is located at a piped area where several heat-conductive thread pipes 51 are mounted parallel to one another between the front net twist mechanism 2 and rear net twist auxiliary mechanism 3. The heating device 5 is disposed in a transverse direction with respect to several heat-conductive thread pipes 51 parallel to each other. As heating device 5, for example an electric heater is used. The interval between the net twist mechanism 2 and the net twist auxiliary mechanism 3 allocated for heating device 5 and each heat-conductive thread pipe 51, is for example a closed space so that heat is kept inside this space without or with little dispersions outside it.

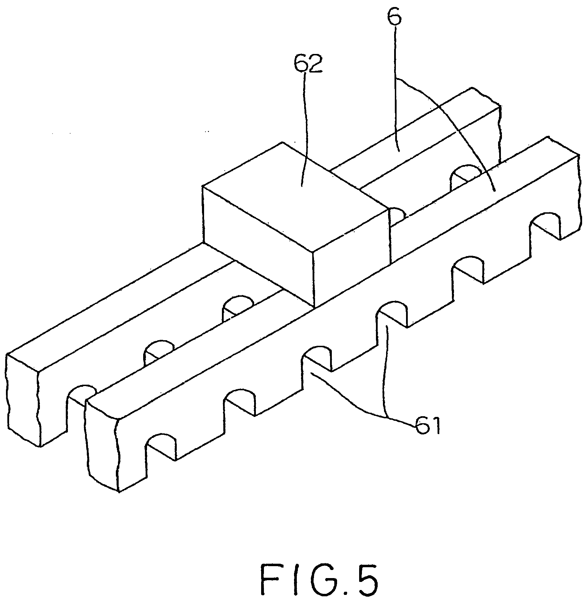

In front of said net twist mechanism 2, there are provided two holding devices 6 which resemble combs and are preferably holding devices. The holding devices 6 maintain the honeycomb shape woven into honeycomb net **b** supplied by the net twist mechanism 2. Two holding devices 6 are connected with each other by connection board 62 (see Figure 5) and carry out the same action. Each holding device 6 has at least a concave portion 61 as the portion corresponding with each twisted portion **c** in net width direction of honeycomb net **b** supplied from the net twist mechanism 2. Each holding machine 6 can move forward at the same speed as the supplying speed of honeycomb net **b** by the net twist mechanism 2. After moving forward a little, it quickly goes back to the original point, and is structured to repeat this movement. Also these two holding devices 6 connected by connection board 62 are structured to be driven, linked with the net twist mechanism 2 by a drive mechanism (not shown).

Each concave portion 61 is for example rounded so as not to become damaged when each twisted portion **c** is pushed from the top. Many of these portions are formed at the same interval under the oblong holding device 6. The holding device 6 is formed as a corrugated shape as viewed from the front. It is possible that each twisted portion **c** in net width direction of honeycomb net **b** sent from the net twist mechanism 2 is under a respective formed concave portions 61 provided under the oblong holding device 6. In the preferred example shown in the figures, the twisted portions **c** of honeycomb net **b** are disposed in alternated concave portion 61 of holding device 6. This means that the concave portion 61 are alternately empty or occupied by a twisted portion **c** of the honeycomb net **b.**

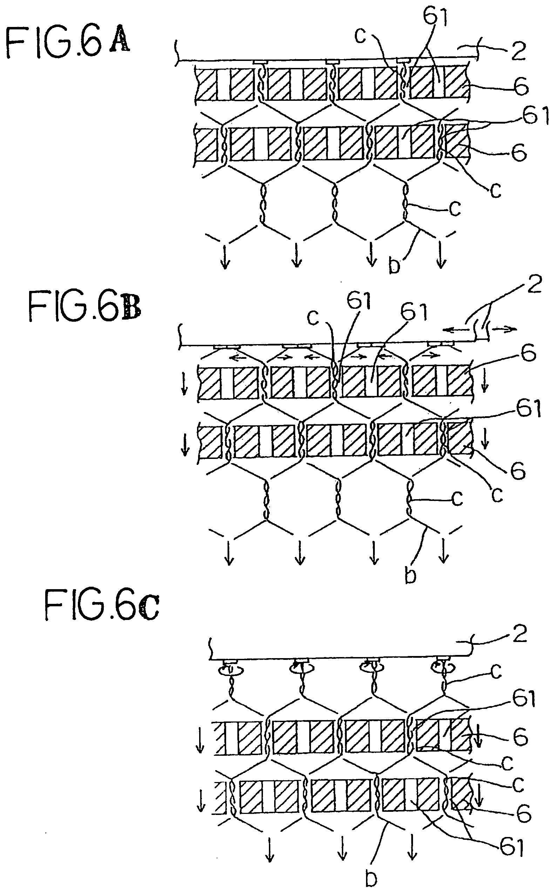

As it is clearly visible in Figs. 6 A-C, the concave portions 61 formed in the two plastic injection machines 6 disposed one behind the other are aligned. And in two holding device 6, the positions of twisted portion **c** at the two sides of an hexagonal mesh of honeycomb net **b** become, in the back/forth direction, a centre position of the hexagonal mesh. The concave portions 61 aligned in the back/forth direction on the two holding machines 6 are therefore alternatively empty or occupied by the twisted portion **c** of honeycomb net **b.** That means that if the twisted portion of honeycomb net **b** is inside the concave portion 61 of front holding device 6, the concave portion 61 of rear holding device 6 which is aligned in the back/forth direction is vacant.

The rear holding device located just beside the net twist mechanism 2 pushes the twisted portion **c** which becomes the hexagon's right and left sides of honeycomb net **b** just supplied from the net twist mechanism 2, and the concave portions 61 of the are alternatively filled and empty. Under connected conditions, at the same speed as the speed of honeycomb net **b,** the holding device shifts to the front for a total length equal to the length of the twisted portion **c,** which becomes the hexagon's right and left side of honeycomb net **b** and sine (front side versus sine oblique side) length from the last end of twisted portion **c** to the twisted portion's beginning end of the next honeycomb net **b,** then goes back to the original position quickly and this movement is repeated.

Two plastic wires twisted portions which become hexagon's right and left side of honeycomb net **b,** supplied from twisting semi-cut gear 21, 22 of net twist mechanism 2, are accompanied by a movement of separation/shifting of the top and bottom semi-cut gear 21, 22, thereby separating right and left wires from the last end of twisted portion c so as to correspond with the adjacent twisting semi-cut gear. Then the newly coupled top and bottom and rotating portions are twisted, and the honeycomb net **b** is woven.

At this time these two plastic wires **a** are separated right and left from the last end of twisted portion **c.**

If pulled strongly right and left, the last end of each twisted portion **c** is connected to the concave portion 61 formed under the holding device 6, so that they are maintained at the central position without being pulled in either right or left direction, and the honeycomb hexagon shape is maintained.

In particular just after twisting, plastic wires **a** are still soft because of the heating, so if the softened condition of right and left plastic wires **a** is subtly different, there is a risk - with the machines and devices of the known type - that they are non-homogeneously pulled to either a right or left side so that the honeycomb shape collapses. With the holding device of the present invention, particularly but not exclusively in the form of the holding device 6, the last end side of each twisted portion **c** is connected with or enters a concave portion 61 and is maintained therein, so it is possible to maintain the honeycomb shape without it being pulled to either a right or left side.

Other holding devices located at the front, push from the top and join twisted portion **c** located at the centre portion of hexagon's both sides of honeycomb net **b** which is pushed by the rear holding device 6 and connected, but linked with the rear aforesaid plastic injection 6 unified by connection board 62, so works with perfect same movement.

Just after being woven into the honeycomb shape, the honeycomb net **b** is softened and the shape may become deformed just before heating, but the honeycomb shape deformation is prevented and maintained by rear and front holding devices 6.

After the the holding device 6, it is installed a cylindrically-shaped sending roller 7 which delivers the just woven honeycomb net **b** forwards. On the circumferential surface of the sending roller 7, pins 71 protrude radially, spaced on the circumference at constant intervals. Pins 71 which rotates hook and pull the apex side of the hexagon of honeycomb shape, so that the honeycomb net **b** moves forwards and is wound on a winding device or reel which is located after the sending roller and which is not shown in the drawings.

It is now explained the operation of the preferred embodiment of the present invention.

Plastic wire **a** supplied from each rear supplying bobbin of twist back mechanism 4 located at the back is inserted respectively for example into each thread hole 31a of a auxiliary twisting semi-cut gear 31 in front of net twist auxiliary mechanism 3. It is then threaded inside a heat-conductive thread pipe 51 and its edge comes out from the thread hole 22a of a twisting semi-cut gear 22 in the net twist mechanism 2 located at its front.

Similarly, plastic wire a supplied from each rear supplying bobbin 43 in twist back mechanism 4 located at the back, is hooked at the outer circumferential channel 41b of guide gear 41 located at the outer circumference of each front supplying bobbin 42 to correspond with the front of guide device 44. Via each guide device 44 corresponding in front, inserted respectively into each thread hole 32a of for example auxiliary twisting semi-cut gear 32 in front net twist auxiliary mechanism 3 of guide gear 41, threaded inside the heat-conductive thread pipe 51 and its edge comes out from the thread hole 22a of twisting semi-cut gear 22 in the net twist mechanism 2 located at its front.

As mentioned above, after setting plastic wire **a** to manufacturing machine 1 of plastic honeycomb net **b,** the heating device 5 is heated up so as to heat each heat-conductive thread pipe 51. Once a heat-conductive thread pipes 51 is heated up, its heat is transferred to all heat-conductive thread pipe 51, so that the plastic wire **a** inside it is heated evenly and softened. In this way, after plastic wires **a** are softened so that the twist resistance is lessened, the net twist mechanism 2 and the net twist auxiliary mechanism 3 linked thereto, as well as the guide gear 41 of twist back mechanism 4 and guide device 44 are all activated.

The operation of the net twist mechanism 2 is that after twisting a few times two plastics wires **a** which are threaded into threading hole 21a, 22a which are coupled to each other and paired through corresponding twisting semi-cut gear 21, 22, one or both of these semi-cut gears 21, 22 are separated/shifted in net width direction so as to reach and pair with adjacent, different twisting semi-cut gears 21, 22. With the rotation of newly corresponding and paired twisting semi-cut gears 21, 22, two plastic wires **a** are twisted for a few times then go back to the original position, and repeat to correspond with previous twisting semi-cut gears 21, 22 and finally rotate again. In this way the honeycomb net **b** is woven and delivered one mesh after the other to the front of the net twist mechanism 2.

The heat-conductive thread pipes 51 between the net twist mechanism 2 and the net twist auxiliary mechanism 3 synchronize with the rotation and separation/shifting in net width direction of twisting semi-cut gears 21, 22 to correspond respectively with net twist mechanism 2 so as to rotate and separate/shift in net width direction.

Similarly, the twist back mechanism 4 behind the net twist auxiliary mechanism 3 synchronizes with the rotation and separation/shifting in net width direction of twisting semi-cut gear 21, 22 in the net twist mechanism 2, by twisting back of plastic wire **a** supplied continuously from front supplying bobbin 42 and rear supplying bobbin 43 to net twist auxiliary mechanism 3. It is therefore prevented that a twist is added to plastic wire **a** twisted in net twist auxiliary mechanism. Moreover, the plastic wires **a** which are supplied continuously to the net twist auxiliary mechanism 3 are prevented from being intertwined with each other by movements of rotation and separation/shifting in net width direction of each auxiliary twisting semi-cut gears 31, 32 in the net twist auxiliary mechanism 3.

When the last end part of twisted portion **c** of plastic wire is sent through threading hole 21a, 22a of twisting semi-cut gear 21,22 in the net twist mechanism 2, the rear holding device 6 comes down from the top and pushes the last end part of twisted portion **c** inside the concave portion 61 formed under its surface, connecting and inserting it (see Fig. 6A). While the plastic wire **a** is still in a softened state after exiting from the net twist mechanism 2, each twisted portion **c** is kept together and maintained by concave portion 61 of rear holding device 6. Just after that, two plastic wires **a** are pulled toward right and left sides, respectively,
and so separated, but the last end part of each twisted portion **c** is kept together by concave portion 61 of holding device 6, so it is possible to maintain the honeycomb shape without shifting right and/or left.

When the concave portion 61 of rear holding device 6 near the net twist mechanism 2 pushes the last part of plastic wire **a** of each twisted portion **c** and is thus kept connected, concave portion 61 of the front holding device 6 simultaneously comes down from the top, pushes and connects the last end part of each twisted portion which has already been sent one pitch before this.

After each concave portion 61 of the holding device 6 pushes and connects each twisted portion of the last end part of the respective plastic wire **a,** at the same speed as the forwarding speed of honeycomb net **b** from the net twist mechanism 2, the holding device 6 shifts to the front of total length of twisted portion **c,** which becomes the hexagon right & left side of honeycomb net **b** and sine (front side versus sine oblique side) length from the last end of twisted portion **c** to twisted portion's beginning end of next honeycomb net **b** (see Figs. 6B, 6C), then moving to the top quickly, at the same time of going back to the rear original position, comes down from the top, pushes and connects the last end part of plastic wire **a,** which has just been sent from net twist mechanism 2, each plastic wire **a** twisted with portion **c** (see Fig. 6A). Back and forth holding device 6 repeats this movement.

Just after being woven into honeycomb shape, the honeycomb net **b** is still soft by heating and there is a possibility for it to be deformed, but due to above-mentioned back and forth mechanism of the holding device 6, the shape of each twisted portion **c** is maintained and not laterally distorted, so that it is prevented a deformation of the honeycomb shape.

Honeycomb net **b** woven by net twist mechanism 2 moves forward and is wound by a winding device (not shown), since rotating pins 71 of the forwarding roller 7 located after the holding device 6 hook the apex sides of honeycomb hexagons and pulls it.

Naturally, the embodiment and features of the present invention can be modified and changed, by adopting equivalents within the scope of the invention as claimed.

## Claims

1. A device (2) for twisting plastic wires (a) to form a plastic open mesh net (b), comprising a front twist mechanism (2) and a back twist mechanism (3), the front and back twist mechanisms having corresponding pairs of front and back thread-holes (21a, 22a, 31a, 32a) for receiving plastic wires to be twisted, **characterized by** each couple of a front thread-hole (21a,22a) and a back thread-hole (31a,32a) being connected by a corresponding heat-conductive thread guide (51).

2. A device according to claim 1, wherein each heat-conductive thread guide is a heat-conductive pipe (51).

3. A device according to claim 2, wherein each heat-conductive pipe (51) is a metal pipe.

4. A device according to any one of claims 1 to 3, further comprising a heating device (5) disposed between the front twist mechanism (2) and the back twist mechanism (3) to heat the heat-conductive thread guides (51).

5. A device according to claim 4, wherein the heat-conductive thread guides (51) and the heating device (5) are located in a closed space.

6. A machine (1) for twisting plastic wires to form a plastic open mesh net, comprising a supplying device (41) for supplying plastic wires, a heating device (5) to heat and soften the plastic wires (a) a twisting device (2) according to any of the receeding claims for twisting the softened plastic wires (a) and form an open mesh net (b), a collecting device (7) to collect the formed open mesh net (b), the machine further comprising a holding device (6) located between the twisting device (2) and the collecting device (7) to hold the just formed net (b) into a uniform shape.

7. A machine according to claim 6, wherein the holding device (6) comprise at least a number of concave portions (61) each located at the spot which corresponds to each twisted portions (c) of the open mesh net (b) in the direction of the advancement of the net (b).

8. A machine according to claim 7, wherein the holding device (6) comprise two comb-shaped holding elements (6) connected together.

9. A machine according to claim 6 or 7, wherein the holding device (6) is made of a piece of corrugated plastic injection.

## Patentansprüche

1. Vorrichtung (2) zum Verdrehen von Plastikdrähten (a) zum Bilden eines offenen Plastikmaschennetzes (b), umfassend einen vorderen Verdrehmechanismus (2) und einen hinteren Verdrehmechanismus (3), wobei der vordere und der hintere Verdrehmechanismus zugehörige Paare von vorderen und hinteren Fadenlöchern (21a, 22a, 31a, 32a) zum Aufnehmen von zu verdrehenden Plastikdrähten aufweisen, **dadurch gekennzeichnet, dass** jedes Paar eines vorderen Fadenlochs (21a, 22a) und eines hinteren Fadenlochs (31a, 32a) durch eine entsprechende wärmeleitende Fadenführung (51) verbunden ist.

2. Vorrichtung nach Anspruch 1, wobei jede wärmeleitende Fadenführung ein wärmeleitendes Rohr (51) ist.

3. Vorrichtung nach Anspruch 2, wobei jedes wärmeleitende Rohr (51) ein Metallrohr ist.

4. Vorrichtung nach einem der Ansprüche 1 bis 3, ferner umfassend eine Heizvorrichtung (5), die zwischen dem vorderen Verdrehmechanismus (2) und dem hinteren Verdrehmechanismus (3) zum Erwärmen der wärmeleitenden Fadenführungen (51) angeordnet ist.

5. Vorrichtung nach Anspruch 4, wobei die wärmeleitende Fadenführungen (51) und die Heizvorrichtung (5) in einem geschlossenen Raum angeordnet sind.

6. Maschine (1) zum Verdrehen von Plastikdrähten zum Bilden eines offenen Plastikmaschennetzes, umfassend eine Zuführvorrichtung (41) zum Zuführen von Plastikdrähten, eine Heizvorrichtung (5) zum Erwärmen und Aufweichen der Plastikdrähte (a);
eine Verdrehvorrichtung (2) nach einem der vorhergehenden Ansprüche zum Verdrehen der aufgeweichten Plastikdrähte (a) und zum Bilden eines offenen Maschennetzes (b), eine Sammelvorrichtung (7) zum Sammeln des geformten offenen Maschennetzes (b), wobei die Maschine ferner eine Haltevorrichtung (6) umfasst, die zwischen der Verdrehvorrichtung (2) und der Sammelvorrichtung (7) zum Halten des soeben gebildeten Netzes (b) in einer einheitlichen Form angeordnet ist.

7. Maschine nach Anspruch 6, wobei die Haltevorrichtung (b) mindestens eine Anzahl von konkaven Abschnitten (61) umfasst, die jeweils an der Stelle angeordnet sind, die jedem verdrehten Abschnitt (c) des offenen Maschennetzes (b) in Richtung des Vorschubs des Netzes (b) entspricht.

8. Maschine nach Anspruch 7, wobei die Haltevorrichtung (6) zwei kammförmige Halteelemente (6) umfasst, die miteinander verbunden sind.

9. Maschine nach Anspruch 6 oder 7, wobei die Haltevorrichtung (6) einstückig durch Wellplastik-Einspritzung hergestellt wird.

## Revendications

1. Dispositif (2) pour entrelacer des fils en plastique (a) afin de former un filet à mailles ouvertes en plastique (b), comprenant un mécanisme d'entrelacement avant (2) et un mécanisme d'entrelacement arrière (3), les mécanismes d'entrelacement avant et arrière ayant des paires correspondantes d'orifices à fil avant et arrière (21a, 22a, 31a, 32a) pour recevoir des fils en plastique à entrelacer, **caractérisé en ce que** chaque couple d'orifice à fil avant (21a, 22a) et d'orifice à fil arrière (31a, 32a) est relié par un guide fil (51) thermoconducteur correspondant.

2. Dispositif selon la revendication 1, dans lequel chaque guide fil thermoconducteur est un tube thermoconducteur (51).

3. Dispositif selon la revendication 2, dans lequel chaque tube thermoconducteur (51) est un tube métallique.

4. Dispositif selon l'une quelconque des revendications 1 à 3, comprenant par ailleurs un dispositif de chauffage (5) disposé entre le mécanisme d'entrelacement avant (2) et le mécanisme d'entrelacement arrière (3) pour chauffer les guides fil thermoconducteurs (51).

5. Dispositif selon la revendication 4, dans lequel les guides fil thermoconducteurs (51) et le dispositif de chauffage (5) sont situés dans un espace fermé.

6. Machine (1) pour entrelacer des fils en plastique (a) afin de former un filet à mailles ouvertes en plastique, comprenant un dispositif d'alimentation (41) pour l'alimentation de fils en plastiques, un dispositif de chauffage (5) pour chauffer et ramollir les fils en plastique (a), un dispositif d'entrelacement (2) selon l'une quelconque des revendications précédentes pour entrelacer les fils en plastique (a) ramollis et former un filet à mailles ouvertes (b), un dispositif de collecte (7) pour collecter le filet à mailles ouvertes (b) formé, la machine comprenant par ailleurs un dispositif de maintien (6) situé entre le dispositif d'entrelacement (2) et le dispositif de collecte (7) afin de maintenir dans une forme régulière le filet (b) venant d'être formé.

7. Machine selon la revendication 6, dans laquelle le dispositif de maintien (6) comprend au moins un certain nombre de parties concaves (61) situées chacune à l'endroit qui correspond à chacune des parties entrelacées (c) du filet à mailles ouvertes (b) dans la direction de progression du filet (b).

8. Machine selon la revendication 7, dans laquelle le dispositif de maintien (6) comprend deux éléments de maintien en forme de peigne (6) reliés ensemble.

9. Machine selon la revendication 6 ou 7, dans laquelle le dispositif de maintien (6) est formé par une pièce d'injection de plastique ondulé.
